# EUROPÄISCHE PATENTSCHRIFT

(11) **EP 0 591 735 B1**
(45) Veröffentlichungstag und Bekanntmachung des Hinweises auf die Patenterteilung: **27.11.1996**
(21) Anmeldenummer: 93114977.7
(22) Anmeldetag: 17.09.1993
(51) Int. Cl.: B60R 13/02

(54) **Zweifarbiger Formhimmel für Personenwagen**
Bicolour headliner for automotive vehicles
Ciel de pavillon bicolore pour voitures

(30) Priorität: 26.09.1992 DE 4232374
(43) Veröffentlichungstag der Anmeldung: 13.04.1994
(73) Patentinhaber: BENECKE KALIKO AKTIENGESELLSCHAFT, 30149 Hannover (DE)
(72) Erfinder: Zweigart, Gerhard, D-71134 Aidlingen (DE); Rust, Sabine, D-71069 Sindelfingen (DE); Peters, Henning, D-72285 Pfalzgrafenweiler (DE); Louis, Denis, D-66787 Wadgassen (DE); März, Stefan, D-66359 Bous (DE)
(74) Vertreter: Schneider, Egon

(56) Entgegenhaltungen:
- FR-A- 2 231 541
- PATENT ABSTRACTS OF JAPAN vol. 13, no. 398 (M-866)(3746) 5. September 1989 & JP-A-01 141 139 (IKEDA BUSSAN CO LTD) 2. Juni 1989
- PATENT ABSTRACTS OF JAPAN vol. 016, no. 422 (M-1305)4. September 1992 & JP-A-04 143 138 (NISHIKAWA KASEI CO LTD) 18. Mai 1992

## Beschreibung

Die Erfindung geht aus von einem selbsttragenden Innenverkleidungsteil zur Auskleidung von Pkw-Karosserien nach dem Oberbegriff von Anspruch 1, wie er beispielsweise aus der EP 411 376 A1 als bekannt hervorgeht.

Diese Druckschrift zeigt ein selbsttragendes Innenverkleidungsteil für die Türen von Pkw-Karosserien, mit einem tragenden, formstabilen Grundkörper aus einem Leichtwerkstoff und einem Dekorbezug auf dessen Sichtseite. Ferner enthält die Tür-Innenverkleidung einen weiteren, sich farblich und/oder in der Textur vom ersten Dekorbezug unterscheidenden zweiten Dekorbezug, der in einem flächenmäßig durch eine definierte Applikationskontur bestimmten Applikationsbereich appliziert ist. Dabei ist der zweite Dekorbezug zunächst auf einen der Applikationskontur entsprechenden Zuschnitt eines Trägers aufgeklebt und am abgewinkelten, in den ersten Dekorbezug sich eindrückenden Rand des Trägers bündig zu ihm abgeschnitten. Das solcherart gebildete, aus Trägerteil und aufgeklebtem, zweiten Dekorbezug bestehende Applikationsteil ist seinerseits im Applikationsbereich auf die Tür-Innenverkleidung aufgeklipst. Diese weist am Rand des Applikationsbereiches eine den abgewinkelten Rand aufnehmende umlaufende Rille auf. Es werden in der erwähnten Druckschrift, wenn auch in etwas anderem Zusammenhang, auch andere Befestigungsmethoden derartiger Applikationsteile genannt, z.B. Kleben. Nachteilig an der bekannten Türinnenverkleidung ist der vergleichsweise hohe Aufwand, weil sowohl das Basisteil für den ersten Dekorbezug als auch der Träger für den zweiten Dekorbezug jeweils als Formteile ausgebildet sind. Dieser Aufwand ist allenfalls im Türbereich vertretbar, wo von den Fahrzeuginsassen mit Krafteinwirkungen auf die Türinnenverkleidung gerechnet werden muß. Im Bereich des Fahrzeughimmels wäre ein solcher Aufwand sicher nicht zu rechtfertigen. Die Applikationsteile als gesonderte und gesondert zu montierende Formteile verursachen erhebliche Fertigungs- und Montagekosten. Darüber hinaus bestehen erhebliche gestalterische Einschränkungen bei der Wahl des Werkstoffs und der Form, Lage und Größe der Applikation.

Die GB-PS 1 305 189 zeigt eine an einer Türinnenverkleidung anzubringende Tasche, deren plattenartige, mit einem Dekorbezug überzogene Vorderseite über eine Dehnfalte elastisch mit einer weiteren, rückseitigen Platte verbunden ist, die ihrerseits an der Innenvekleidungsplatte der Fahrzeugtür befestigt ist. Die Platten der Taschenvorder- und der Taschenrückseite sind jeweils zwischen zwei thermoplastische Kunststoffolien eingeschweißt und am Rand mit der Dehnfalte aus gleichem Werkstoff verschweißt.

Aus der DE 39 08 433 A1 ist ein Formhimmel vorbekannt, der sichtseitig einen einheitlichen Dekorbezug aufweist, was insbesondere bei gehobenen Ansprüchen von den Kunden häufig als monoton empfunden wird. Soweit bisher farb- oder textur-unterschiedliche Verkleidungsteile am Formhimmel - insbesondere in einem Bereich oberhalb der A-, B- oder C-Säulen - vorgesehen wurden, waren diese als gesonderte und gesondert zu montierende Formteile aus Spritzguß-verarbeitetem Kunststoff ausgebildet, die erhebliche Fertigungs- und Montagekosten verursachten. Darüber hinaus konnte der Werkstoff und die Form, Lage und Größe der Applikation nicht frei gewählt werden.

Aufgabe der Erfindung ist es, das gattungsgemäß zugrundegelegte Innenverkleidungsteil dahingehend zu verbessern, daß es bei einer Ausbildung als Formhimmel und bei einer zweifarbigen Gestaltung sich zum einen rationell herstellen läßt und daß zum anderen für die Dekors keine oder nur unwesentliche Einschränkungen bei der Wahl des Materials und hinsichtlich der Lage und der Form der Applikationskonturen bestehen.

Diese Aufgabe wird bei Zugrundelegung des gattungsgemäßen Formhimmels erfindungsgemäß durch die kennzeichnenden Merkmale von Anspruch 1 gelöst. Dank der Vorfertigung eines in sich stabilen flachen und flexiblen Applikationsteiles mit einem zweiten Dekorbezug kann dieses Applikationsteil rationell und stabil durch Kleben an den Formhimmel appliziert werden. Dabei bestehen keine Beschränkungen hinsichtlich der Wahl der Dekorbezüge bzw. ihrer Materialien oder der Form bzw. Lage der Applikationsteile.

Die Vorteile der erfindungsgemäßen Ausgestaltung des Formhimmels liegen allgemein in der Einfachheit sowohl des Herstellungsverfahrens des Formhimmels selber als auch dessen Einbaus in der Karosserie trotz optisch anspruchsvoller Zweifarbigkeit des Formhimmels. Darüber hinaus können alle möglichen Materialien wie Stoffe, Gewirke, Leder oder genarbte Folien appliziert und die Applikationskontur nach Größe, Lage und Form frei gestaltet werden. In dieser Hinsicht schafft der erfindungsgemäße Vorschlag gestalterische Freiheit bei wirtschaftlich vertretbaren Kosten. Speziell unter Fertigungsgesichtspunkten liegen - beim Vergleich mit der eingangs kurz angesprochenen Art der Herstellung von zweifarbigen Formhimmeln - die Vorteile der Erfindung darin,
- daß Kosten für gesonderte Formteile im Bereich der Zweifarbigkeit des Formhimmels und deren aufwendige Herstellung entfallen,
- daß bei der Fahrzeugmontage durch Entfall der gesonderten Formteile entsprechende Montagezeit und entsprechende Kosten wegfallen und
- daß der neue zweifarbige Formhimmel weniger wiegt als die bisherige Konstruktion eines zweifarbigen Formhimmels.

Zweckmäßige Ausgestaltungen der Erfindung können den Uneransprüchen entnommen werden; im übrigen ist die Erfindung an hand eines in den Zeichnungen dargestellten Ausführungsbeispieles nachfolgend noch erläutert; dabei zeigen:
- Fig. 1: eine Ansicht auf die Sichtseite eines zweifarbigen Formhimmels,
- Fig. 2: einen vergrößerten teilweisen Querschnitt durch den Rand des Formhimmels entlang der Schnittlinie II-II in Figur 1,
- Fig. 3: einen weiteren ebenfalls vergrößerten Querschnitt durch den Rand des Formhimmels entlang der Schnittlinie III-III in Figur 1 und
- Fig. 4: eine nochmals vergrößerte Einzeldarstellung des Applikationsteiles im teilweisen Querschnitt.

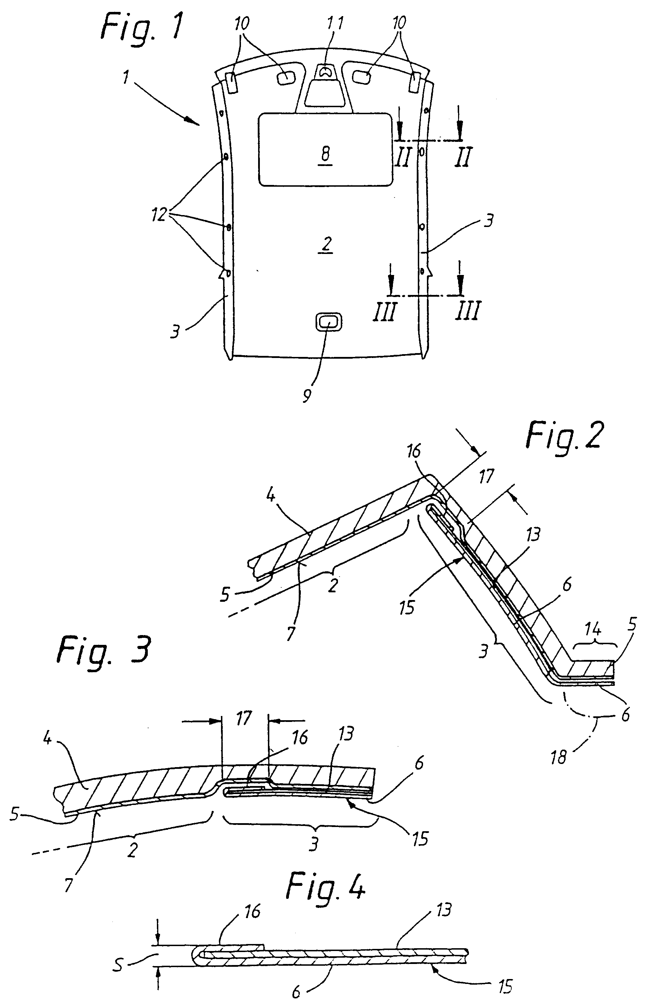

Der in Figur 1 dargestellte selbsttraende Formhimmel 1 ist für die dachseitige Innenverkleidung von Pkw-Karosserien bestimmt. Er weist einen tragenden, formstabilen Grundkörper 4 aus einem Leichtwerkstoff, beispielsweise aus Hartschaumstoff, und einen ersten Dekorbezug 5 auf dessen Sichtseite 7 auf, die eine Grunddekorzone 2 des Formhimmels bildet. In den Formhimmel sind verschieden Durchbrüche für ein Schiebedach (Durchbruch 8), für eine Fondbeleuchtung (9), für die Sonnenblendenbefestigung (10), für den Innenspiegel (11) und Durchbrüche 12 für die Befestigung der seitlichen Haltegriffe angebracht. Außer der Grunddekorzone 2 sind weitere, sich farblich und/oder in der Textur vom ersten Dekorbezug 5 unterscheidende, zweite Dekorbezüge 6 in flächenmäßig durch definierte Applikationskonturen bestimmten Applikationsbereichen 3 des Formhimmels 1 appliziert. Der zweite Dekorbezug besteht vorzugsweise aus einem textilen Werkstoff, jedoch kommen ohne weiteres auch Leder oder genarbte Kunststofffolie in Betracht. Beim dargestellten Ausführungsbeispiel ist der Applikationsbereich 3 jeweils in Form eines Streifens an den beiden Längsrändern des Formhimmels 1 angeordnet. Dabei ist der zweite Dekorbezug 6 zunächst auf einen der Applikationskontur entsprechenden Zuschnitt einer Trägerfolie 13 aufgeklebt und ein über den Rand des Zuschnittes überstehender Rand des zweiten Dekorbezuges 6 auf die Rückseite der Trägerfolie 13 zu einem Umbug 16 umgebogen, zumindes soweit es sich um einen frei liegenden, d.h. sichtbaren Rand des Applikationsbereiches 3 handelt. Und zwar ist der zweite Dekorbezug 6 mittels eines wärmeaktivierbaren Schmelzklebers auf die Trägerfolie 13 aufgeklebt, die vorzugsweise aus Polyester (PES) mit hoher Wärmebeständigkeit besteht. Auf diese Weise wird zunächst ein Applikationsteil 15 gebildet, das aus Trägerfolie 13 und aufgeklebtem, zweiten Dekorbezug 6 besteht. Dieses wird anschließend im Applikationsbereich 3 seinerseits auf den Formhimmel 1 aufgeklebt.

Im Bereich des Umbugs 16 des zweiten Dekorbezuges 6 auf der Trägerfolie 13 ist der tragende, formstabile Grundkörper 4 des Formhimmels streifenförmig ausgespart. Und zwar entspricht die Tiefe der Aussparung 17 der Gesamtstärke des Applikationsteiles 15 in dessen Rand (Maß S); die Breite entspricht der Umbugbreite. Auf diese Weise ergibt sich ein oberflächenbündiger Übergang vom Applikationsteil 15 in die sonstige sichtseitige Oberfläche des Formhimmels.

Bei der in Figur 2 dargestellten Ausgestaltung erstreckt sich das Applikationsteil 15 bis an den von einer Randeinklemmung 18 überdeckten Rand 14 des Formhimmels; außerdem liegt vor dem Rand 14 noch ein scharfe Biegung des tragenden Grundkörpers 4. Um in einem solchen Fall das Applikationsteil 15 auch im Bereich des Randes 14 sicher befestigen zu können, endigt die Trägerfolie 13 hier vor dem Rand 14 des Formhimmels, und der dort über die Trägerfolie überstehende Rand des zweiten Dekorbezuges 6 ist unmittelbar auf den Formhimmel aufgeklebt.

## Patentansprüche

1. Innenverkleidungsteil zur Auskleidung von Pkw-Karosserien, mit einem tragenden, formstabilen Grundkörper und einem ersten Dekorbezug auf dessen Sichtseite, mit einem weiteren, sich farblich und/oder in der Textur vom ersten Dekorbezug unterscheidender zweiter Dekorbezug, der in flächenmäßig durch definierte Applikationskonturen bestimmten Applikationsbereichen auf dem Grundkörper appliziert ist, wobei der zweite Dekorbezug zunächst auf einen der Applikationskontur entsprechenden Träger aufgeklebt und das aus Träger und aufgeklebtem, zweiten Dekorbezug bestehende Applikationsteil im Applikationsbereich seinerseits auf dem Grundkörper befestigt ist.
**gekennzeichnet durch** eine Ausgestaltung des Innenverkleidungsteiles als selbsttragender Formhimmel aus einem Leichtwerkstoff für die dachseitige Innenverkleidung von Pkw-Karosserien gemäß folgenden Merkmalen:
- der Träger für den zweiten Dekorbezug ist als Trägerfolie (13) ausgebildet,
- der über den Rand der Trägerfolie (13) überstehende Rand des Zuschnittes des zweiten Dekorbezuges (6) ist zumindest im Breich des frei liegenden, d.h. sichtbaren Randes des Applikationsbereiches (3) auf die Rückseite der Trägerfolie (13) umgebogen,
- das aus Trägerfolie (13) und aufgeklebtem, zweiten Dekorbezug (6) bestehende Applikationsteil (15) ist durch Aufgekleben im Applikationsbereich (3) des Formhimmels (1) befestigt.
- im Bereich des Umbugs (16) des zweiten Dekorbezuges (6) auf der Trägerfolie (13) ist der tragende, formstabile Grundkörper (4) des Formhimmels (1) um die Gesamtstärke des Applikationsteiles (15) in dessen Rand (Maß S) auf einer der Umbugbreite entsprechenden Breite derart streifenförmig ausgespart (Aussparung 17), daß sich ein oberflächenbündiger Übergang vom Applikationsteil (15) in die sonstige sichtseitige Oberfläche des Formhimmels (1) ergibt.

2. Innenverkleidungsteil nach Anspruch 1,
**dadurch gekennzeichnet**,
daß der Applikationsbereich (3) jeweils in Form eines Streifens an den beiden Längsrändern des Formhimmels (1) ausgebildet ist.

3. Innenverkleidungsteil nach Anspruch 1,
**dadurch gekennzeichnet**,
daß für den Fall, daß ein Applikationsteil (15) sich bis an den von einer Randeinklemmung (18) überdeckten Rand (14) des Formhimmels (1) hin erstreckt, die Trägerfolie (13) vor dem Rand (14) des Formhimmels (1) endigt und der dort über die Trägerfolie (13) überstehende Rand des zweiten Dekorbezuges (6) unmittelbar auf den Formhimmel (1) aufgeklebt ist.

4. Innenverkleidungsteil nach Anspruch 1,
**dadurch gekennzeichnet**,
daß die Trägerfolie (13) aus Polyester (PES) mit hoher Wärmebeständigkeit besteht.

5. Innenverkleidungsteil nach Anspruch 1,
**dadurch gekennzeichnet**,
daß der zweite Dekorbezug (6) mittels wärmeaktivierbarem Schmelzkleber auf die Trägerfolie (13) aufgeklebt ist.

6. Innenverkleidungsteil nach Anspruch 1,
**dadurch gekennzeichnet**,
daß der zweite Dekorbezug (6) aus einem textilen Werkstoff besteht.

## Claims

1. Interior covering for lining passenger vehicle bodies, having a supporting, rigid basic body member and a first decorative trim on the visible side of said body member, and having an additional second decorative trim, which differs in respect of colour and/or in respect of texture from the first decorative trim and is applied to the basic body member in application regions which are determined over the area by specific application contours, the second decorative trim being initially adhered to a carrier corresponding to the application contour, and the part to be applied, which comprises carrier and adhered second decorative trim, being secured in turn in the application region on the basic body member, characterised by the interior covering being configured as a self-supporting moulded roof lining formed from a lightweight material for the interior roof covering of passenger vehicle bodies according to the following features:
- the carrier for the second decorative trim is configured as carrier film (13),
- the edge of the blank of the second decorative trim (6) protruding beyond the edge of the carrier film (13) is bent-over onto the rear side of the carrier film (13), at least in the region of the freely lying, i.e. visible edge of the application region (3),
- the part to be applied (15), which comprises carrier film (13) and adhered second decorative trim (6), is secured by adhesion in the application region (3) of the moulded roof lining (1), and
- in the region of the bent-over portion (16) of the second decorative trim (6) on the carrier film (13), the supporting, rigid basic body member (4) of the moulded roof lining (1) is recessed (recess 17) in a strip-like manner by an amount corresponding to the overall thickness of the part to be applied (15) in the edge thereof (dimension S) over a width corresponding to the width of the bent-over portion so that a transition, flush with the surface, is produced from the part to be applied (15) and the remaining visible surface of the moulded roof lining (1).

2. Interior covering according to claim 1, characterised in that the application region (3) is configured in the form of a strip on each of the two longitudinal edges of the moulded roof lining (1).

3. Interior covering according to claim 1, characterised in that, in the case where a part to be applied (15) extends to the edge (14) of the moulded roof lining (1) covered by an edge fastening (18), the carrier film (13) terminates before the edge (14) of the moulded roof lining (1), and the edge of the second decorative trim (6) protruding there beyond the carrier film (13) is adhered directly to the moulded roof lining (1).

4. Interior covering according to claim 1, characterised in that the carrier film (13) is formed from polyester (PES) having a high resistance to heat.

5. Interior covering according to claim 1, characterised in that the second decorative trim (6) is adhered to the carrier film (13) by means of a hot-melt-type adhesive.

6. Interior covering according to claim 1, characterised in that the second decorative trim (6) is formed from a textile material.

## Revendications

1. Pièce d'habillage intérieur pour l'habillage de carrosseries de voitures de tourisme, comportant un corps de base porteur, de forme stable, et un premier revêtement décoratif sur sa face vue, ainsi qu'un autre, second, revêtement décoratif qui se distingue du premier revêtement décoratif par la couleur et/ou par la texture et qui est appliqué sur le corps de base dans des zones d'application déterminées en surface par des contours d'application définis, le second revêtement décoratif étant tout d'abord collé sur un support correspondant au contour d'application et la pièce d'application, constituée du support et du second revêtement décoratif, collé sur elle, étant de son côté fixée sur le corps de base dans la zone d'application,
caractérisée par une réalisation de la pièce d'habillage intérieur sous forme de pavillon profilé autoporteur en matériau léger pour l'habillage intérieur, côté toit, des carrosseries de voitures de tourisme, selon les caractéristiques suivantes:
- le support pour le second revêtement décoratif est conçu sous forme de feuille support (13),
- le bord de la portion du second revêtement décoratif (6) qui déborde au-delà du bord de la feuille support (13) est replié, en un pli arrondi, sur la face arrière de la feuille support (13), au moins au voisinage du bord libre, c'est-à-dire visible, de la zone d'application (3),
- la pièce d'application (15), constituée de la feuille support (13) et du second revêtement décoratif (6) collé sur elle, est fixée par collage dans la zone d'application (3) du pavillon profilé (1),
- dans la zone du pli arrondi (16) du second revêtement décoratif (6) sur la feuille support (13), le corps de base (4), porteur et de forme stable, du pavillon profilé (1) est évidé (évidement 17), en forme de bande, de l'épaisseur totale de la pièce d'application (15) sur son bord (cote S) sur la largeur correspondant à la largeur du pli arrondi, de façon à obtenir une jonction, avec affleurement en surface, de la pièce d'application (15) avec la surface correspondante du pavillon profilé (1) du côté vu.

2. Pièce d'habillage intérieur selon la revendication 1,
caractérisée
par le fait que chacune des zones d'application (3) est conçue sous forme d'une bande le long des deux bords longitudinaux du pavillon profilé (1).

3. Pièce d'habillage intérieur selon la revendication 1,
caractérisée
par le fait que, dans le cas où une pièce d'application (15) s'étend jusqu'au bord (14) du pavillon profilé (1) recouvert par une fixation de bordure (18), la feuille support (13) se termine avant le bord (14) du pavillon profilé (1) et le bord du second revêtement décoratif (6) qui déborde au-delà de la feuille support (13) est directement collé sur la pavillon profilé (1).

4. Pièce d'habillage intérieur selon la revendication 1,
caractérisée
par le fait que la feuille support (13) est un polyester (PES) de haute résistance à la chaleur.

5. Pièce de revêtement intérieur selon la revendication 1,
caractérisée
par le fait que le second revêtement décoratif (6) est collé sur la feuille support (13) au moyen d'une colle à fondre que la chaleur peut activer.

6. Pièce d'habillage intérieur selon la revendication 1,
caractérisée
par le fait que le second revêtement décoratif (6) est constitué d'un matériau textile.
